# EUROPEAN PATENT APPLICATION

(11) **EP 4 546 210 A1**
(43) Date of publication of application: **30.04.2025**
(21) Application number: 23888031.4
(22) Date of filing: 08.11.2023
(51) Int. Cl.: G06F 40/58, G06N 3/044, G06N 3/0464, G06N 3/047, G06N 3/0475, G06N 3/08, G06F 18/25, G06V 10/40, G06V 10/80

(54) **TRANSLATION METHOD AND APPARATUS, READABLE MEDIUM, AND ELECTRONIC DEVICE**

(30) Priority: 10.11.2022 CN 202211407229
(71) Applicant: BEIJING YOUZHUJU NETWORK TECHNOLOGY CO. LTD., Beijing 101299 (CN); Lemon Inc., Grand Cayman, KY1-1205 (KY)
(72) Inventor: ZHU, Yaoming, Beijing 100028 (CN); SUN, Zewei, Beijing 100028 (CN); CHENG, Shanbo, Singapore 018960 (SG); WANG, Mingxuan, Beijing 100028 (CN)
(74) Representative: Williams, Michael David
(86) International application number: PCT/CN2023/130388
(87) International publication number: WO 2024/099342

(57) **Abstract**

Embodiments of the present disclosure relate to a translation method and apparatus, a readable medium, and an electronic device. The method includes: determining a source text to be translated and a source associated image corresponding to the source text; and inputting the source text and the source associated image into a pre-generated target multimodal translation model to obtain a target translation text output by the target multimodal translation model. The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image.

## Description

### CROSS-REFERENCE TO RELATED APPLICATION(S)

This application claims priority to Chinese Patent Application No. 202211407229.8 filed on November 10, 2022, the disclosure of which is incorporated herein by reference in its entirety.

### TECHNICAL FIELD

The present disclosure relates to the field of computer technologies, and in particular, to a translation method and apparatus, a readable medium, and an electronic device.

### BACKGROUND

With the progress of computer technologies, machine translation has become an important research topic in natural language text processing. Machine translation refers to a process of translating a source-language text into a target-language text semantically equivalent thereto through a computer or another electronic device. Multimodal machine translation in machine translation can further improve translation accuracy. Multimodal machine translation refers to a machine translation model that integrates multimodal information from texts, images, sounds, and the like. Compared with a pure-text machine translation model, a multimodal information machine translation model can use information in other modalities in addition to a text modality to assist and improve a translation result, so as to make up for the deficiency of unimodal machine translation and improve the accuracy of machine translation. For example, image information can help eliminate ambiguity and improve accuracy, and is particularly useful in e-commerce, conversation, and other scenarios.

However, in the related art, the translation accuracy of a multimodal machine translation model is not high, which affects the application of multimodal machine translation.

### SUMMARY

This summary is provided to introduce concepts in a brief form that are described in detail in the following detailed description section. This summary section is not intended to identify key features or essential features of the claimed technical solution, nor is it intended to be used to limit the scope of the claimed technical solution.

According to a first aspect of embodiments of the present disclosure, a translation method is provided. The method includes:
determining a source text to be translated and a source associated image corresponding to the source text; and
inputting the source text and the source associated image into a pre-generated target multimodal translation model to obtain a target translation text output by the target multimodal translation model.

The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

According to a second aspect of embodiments of the present disclosure, a translation apparatus is provided. The apparatus includes:
a determination module configured to determine a source text to be translated and a source associated image corresponding to the source text; and
a translation module configured to input the source text and the source associated image into a pre-generated target multimodal translation model to obtain a target translation text output by the target multimodal translation model.

The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

According to a third aspect of embodiments of the present disclosure, a computer-readable medium is provided, on which a computer program is stored, and the computer program, when executed by a processing apparatus, implements the steps of the method according to the first aspect of the present disclosure.

According to a fourth aspect of embodiments of the present disclosure, an electronic device is provided, including:
a storage apparatus having a computer program stored thereon; and
a processing apparatus configured to execute the computer program in the storage apparatus to implement the steps of the method according to the first aspect of the present disclosure.

Using the above technical solutions, a source text to be translated and a source associated image corresponding to the source text are determined; and the source text and the source associated image are input into a pre-generated target multimodal translation model to obtain a target translation text output by the target multimodal translation model. The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same. In this way, by using at least two of sample data, such as multimodal multilingual data, unimodal multilingual data, and multimodal monolingual data, to train an undetermined multimodal translation model and then generating a target multimodal translation model, the number of samples for model training can be increased, thereby improving the translation accuracy of the trained target multimodal translation model.

It should be understood that the above general description and the following detailed description are only exemplary and explanatory, and cannot limit the present disclosure.

### BRIEF DESCRIPTION OF THE DRAWINGS

The above and other features, advantages, and aspects of various embodiments of the present disclosure become more apparent with reference to the following specific embodiments and in conjunction with the drawings. Throughout the drawings, the same or similar reference numerals denote the same or similar elements. It should be understood that the drawings are schematic and that parts and elements are not necessarily drawn to scale. In the drawings:
FIG. 1 is a flowchart of a translation method according to an exemplary embodiment.
FIG. 2 is a structural diagram of a target multimodal translation model according to an exemplary embodiment.
FIG. 3 is a flowchart of a method for generating a target multimodal translation model according to an exemplary embodiment.
FIG. 4 is a schematic diagram of data flow of training of a target multimodal translation model according to an exemplary embodiment.
FIG. 5 is a structural diagram of another target multimodal translation model according to an exemplary embodiment.
FIG. 6 is a flowchart of a method for generating another target multimodal translation model according to an exemplary embodiment.
FIG. 7 is a schematic diagram of data flow of training of another target multimodal translation model according to an exemplary embodiment.
FIG. 8 is a structural diagram of another target multimodal translation model according to an exemplary embodiment.
FIG. 9 is a block diagram of a translation apparatus according to an exemplary embodiment.
FIG. 10 is a block diagram of another translation apparatus according to an exemplary embodiment.
FIG. 11 is a block diagram of an electronic device according to an exemplary embodiment.

### DETAILED DESCRIPTION OF EMBODIMENTS

Embodiments of the present disclosure are described in more detail below with reference to the drawings. Although some embodiments of the present disclosure are shown in the drawings, it should be understood that the present disclosure can be implemented in various forms and should not be construed as limited to the embodiments set forth herein. On the contrary, these embodiments are provided for a more thorough and complete understanding of the present disclosure. It should be understood that the drawings and the embodiments of the present disclosure are only for exemplary purposes, and are not intended to limit the protection scope of the present disclosure.

It should be understood that the various steps described in the method implementations of the present disclosure may be performed in different orders and/or in parallel. Furthermore, the method implementations may include additional steps and/or omit the steps shown. The scope of the present disclosure is not limited in this regard.

The term "comprise/include" used herein and variations thereof are open-ended inclusions, that is, "comprise/include but not limited to". The term "based on" is "at least partially based on". The term "one embodiment" means "at least one embodiment"; the term "another embodiment" means "at least one other embodiment"; and the term "some embodiments" means "at least some embodiments". Related definitions of other terms will be given in the following description.

It should be noted that concepts such as "first" and "second" mentioned in the present disclosure are only used to distinguish different apparatuses, modules, or units, and are not used to limit the order of functions performed by these apparatuses, modules, or units or their interdependence.

It should be noted that the modifiers "one" and "a plurality" mentioned in the present disclosure are illustrative rather than restrictive, and those skilled in the art should understand that unless the context clearly indicates otherwise, they should be understood as "one or more". In the description of the present disclosure, unless otherwise stated, "a plurality" means two or more than two, and other quantifiers are similar; "at least one item ", "one item or more items " or similar expressions refer to any combination of these items, including any combination of a single item or a plurality of items. For example, at least one "a" may represent any number of "a"; for another example, one or more of a, b, and c may represent: a, b, c, a-b, a-c, b-c, or a-b-c, where a, b, and c may be single or plural; "and/or" is an association relationship that describes associated objects, and represents that there may be three relationships. For example, A and/or B may represent three cases: A exists alone, A and B exist at the same time, and B exists alone, where A and B may be singular or plural.

In the embodiments of the present disclosure, although operations or steps are described in a specific order in the drawings, this should not be understood as requiring these operations or steps to be performed in the specific order shown or in a serial order, or requiring all the operations or steps shown to be performed to obtain a desired result. In the embodiments of the present disclosure, these operations or steps may be performed serially; may also be performed in parallel; or a part of these operations or steps may be performed.

The names of messages or information exchanged between apparatuses in the implementations of the present disclosure are only for illustrative purposes, and are not intended to limit the scope of these messages or information.

It should be understood that before using the technical solutions disclosed in the embodiments of the present disclosure, the user should be informed of the type, range of use, use scenarios, and the like of the personal information involved in the present disclosure in an appropriate manner in accordance with relevant laws and regulations, and the user's authorization should be obtained.

For example, in response to receiving an active request from a user, prompt information is sent to the user to clearly inform the user that an operation requested by the user to perform will require the acquisition and use of the user's personal information. Thus, the user can independently choose, according to the prompt information, whether to provide the personal information to software or hardware, such as an electronic device, an application, a server, or a storage medium, that performs the operations of the technical solution of the present disclosure.

As an optional but non-limiting implementation, the manner of sending prompt information to the user in response to receiving an active request from the user may be, for example, a pop-up window, in which the prompt information may be presented in text. In addition, the pop-up window may also carry a selection control for the user to choose whether to "agree" or "disagree" to provide the personal information to the electronic device.

It should be understood that the preceding process of notifying and acquiring the user's authorization is only illustrative, and does not constitute a limitation on the implementations of the present disclosure. Other manners that meet the requirements of relevant laws and regulations may also be applied to the implementations of the present disclosure.

At the same time, it should be understood that data (including, but not limited to, the data itself, the acquisition of data, or the use of data) involved in the technical solution should comply with the requirements of corresponding laws and regulations and related provisions.

Firstly, the application scenario of the present disclosure is described. The present disclosure may be applied to a machine translation scenario, especially a multimodal machine translation scenario. A multimodal information machine translation model may use information in other modalities in addition to a text modality to assist and improve a translation result, so as to make up for the deficiency of unimodal machine translation and improve the accuracy of machine translation. For example, image information can help eliminate ambiguity and improve accuracy, and is particularly useful in e-commerce, conversation, and other scenarios.

In the related art, multimodal machine translation may use a triplet composed of a source-language text, a target-language text, and a picture as training and test data. However, such data is very scarce and difficult to label, resulting in low translation accuracy of a trained model.

In order to solve the preceding problem, the present disclosure provides a translation method and apparatus, a readable medium, and an electronic device. At least two of sample data, such as multimodal multilingual data, unimodal multilingual data, and multimodal monolingual data, are used to train an undetermined multimodal translation model, and a target multimodal translation model is then generated, so that the number of samples for model training can be increased, thereby improving the translation accuracy of the trained target multimodal translation model.

The present disclosure is described in detail below with reference to specific embodiments.

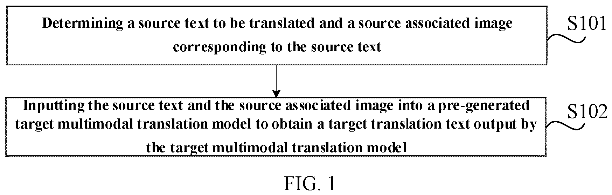

FIG. 1 is a flowchart of a translation method according to an exemplary embodiment. The method may be applied to an electronic device. The electronic device may include a terminal device, such as a smart phone, a smart wearable device, a smart speaker, a smart tablet, a personal digital assistant (PDA), a customer premise equipment (CPE), a personal computer, a vehicle-mounted terminal, or the like. The electronic device may also include a server, such as a local server or a cloud server. As shown in FIG. 1, the method may include the steps described below.

At S101, a source text to be translated and a source associated image corresponding to the source text are determined.

The source text may be a text corresponding to a source language, and the source associated image may be an image indicating all or part of a semantic meaning expressed by the source text. For example, if the source text is "black hat", the source associated image may be an image of a black hat, an image of a hat of any color, or an image of any black object.

It should be noted that the source text may be a word, a sentence, a paragraph, or an article, which is not limited in the present disclosure.

At S102, the source text and the source associated image are input into a pre-generated target multimodal translation model to obtain a target translation text output by the target multimodal translation model.

The target multimodal translation model is a model generated by training an undetermined multimodal translation model according to sample data, and the sample data may include at least two of multimodal multilingual data, unimodal multilingual data, and multimodal monolingual data.

The multimodal multilingual data may include a first source-language text, a first target-language text, and a first image corresponding to the first source-language text, the unimodal multilingual data may include a second source-language text and a second target-language text, and the multimodal monolingual data may include a third target-language text and a second image. The language type of the first source-language text, the language type of the second source-language text, and the language type of the source text may be the same, for example, all of them are Chinese. The language type of the first target-language text, the language type of the second target-language text, the language type of the third target-language text, and the language type of the target translation text may be the same, for example, all of them are English.

In some embodiments, the sample data may include multimodal multilingual data, unimodal multilingual data, and multimodal monolingual data. In some other embodiments, the sample data may include unimodal multilingual data and multimodal monolingual data. In some other embodiments, the sample data may include multimodal multilingual data and multimodal monolingual data. In some other embodiments, the sample data may include multimodal multilingual data and unimodal multilingual data.

It should be noted that the first image may be an associated image corresponding to the first source-language text, and the first image may be used to prompt some or all of a semantic meaning of the first source-language text. The second image may be an associated image corresponding to the third target-language text, and the second image may be used to prompt some or all of a semantic meaning of the third target-language text.

Using the above method, a source text to be translated and a source associated image corresponding to the source text are determined; and the source text and the source associated image are input into a pre-generated target multimodal translation model to obtain a target translation text output by the target multimodal translation model. The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same. In this way, by using at least two of sample data, such as multimodal multilingual data, unimodal multilingual data, and multimodal monolingual data, to train an undetermined multimodal translation model and then generating a target multimodal translation model, the number of samples for model training can be increased, thereby improving the translation accuracy of the trained target multimodal translation model.

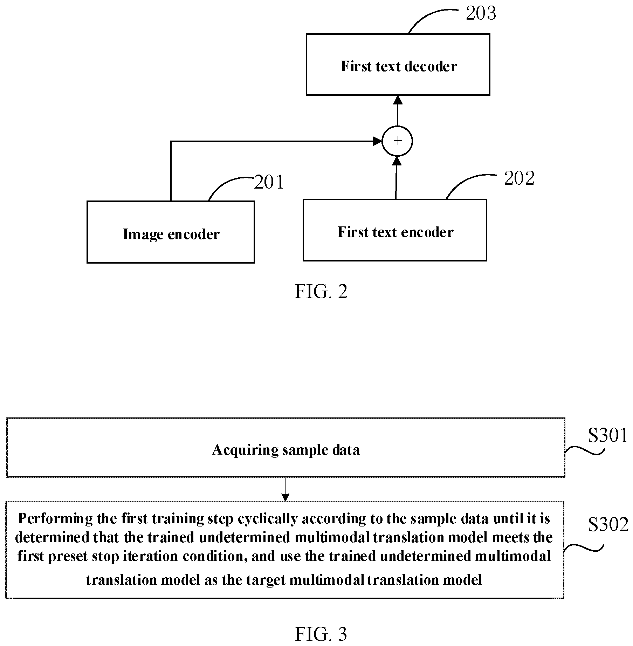

FIG. 2 is a structural diagram of a target multimodal translation model according to an exemplary embodiment. As shown in FIG. 2, the target multimodal translation model includes an image encoder 201, a first text encoder 202, and a first text decoder 203. An output of the image encoder 201 and an output of the first text encoder 202 may be weighted and then input into the first text decoder 203.

It should be noted that the target multimodal translation model shown in FIG. 2 may also be referred to as a fusion multimodal translation model. A source associated image feature may be generated through the image encoder, and the source associated image feature is fused with a text feature of the source text to assist in translating the source text. Based on the target multimodal translation model, S102 may include the following sub-steps.

Firstly, the source associated image is input into the image encoder to obtain the source associated image feature output by the image encoder.

Exemplarily, the image encoder may be an image encoder in a contrastive language-image pre-training (CLIP) model. The CLIP model is a pre-trained neural network model that can be used for matching an image and a text. The image encoder therein may include a deep residual network (ResNet) and/or a vision transformer (ViT). The CLIP model may directly use a large amount of Internet data for pre-training to improve the accuracy of image and text encoding.

It should be noted that the image encoder may also be a neural network used for image encoding in the related art, such as a convolutional neural network (CNN), a recurrent neural network (RNN), a deep belief network (DBN), and a generative adversarial network (GAN).

Secondly, the source text is input into the first text encoder to obtain the first source text feature output by the first text encoder.

Exemplarily, the first text encoder may also be the text encoder in the CLIP model, and the first text encoder may also be a neural network that encodes a text in the related art.

Thirdly, the target feature is obtained by weighting the first source text feature and the source associated image feature.

Exemplarily, the first source text feature and the source associated image feature may be weighted and summed to obtain the target feature. The weights of the first source text feature and the source associated image feature may be preset. For example, the weights of the first source text feature and the source associated image feature may be both set to 50%. Alternatively, the weight of the first source text feature may be set to 70%, and the weight of the source associated image feature may be set to 30%.

Finally, the target feature is input into the first text decoder to obtain the target translation text output by the first text decoder.

It should be noted that the first text decoder may also be a decoder used for machine translation in the related art, and the present disclosure does not limit the specific structure of the first text decoder.

In this way, the source text and the source associated image may be processed through the image encoder, the first text encoder, and the first text decoder in the target multimodal translation model to obtain the translated target translation text.

FIG. 3 is a flowchart of a method for generating a target multimodal translation model according to an exemplary embodiment. As shown in FIG. 3, the target multimodal translation model may be obtained by training an undetermined multimodal translation model. The structure of the undetermined multimodal translation model is the same as that of the target multimodal translation model. For example, the undetermined multimodal translation model may also include the image encoder, the first text encoder, and the first text decoder shown in FIG. 2. The method may include the steps described below.

At S301, sample data is obtained.

At S302, a first training step is cyclically performed according to the sample data until it is determined that a trained undetermined multimodal translation model meets a first preset stop iteration condition, and the trained undetermined multimodal translation model is used as the target multimodal translation model.

The first training step may include the steps described below.

At S11, an undetermined image sample feature, a first undetermined source text, and a first undetermined target text are determined according to the sample data.

The sample data may include at least two of the preceding multimodal multilingual data, unimodal multilingual data, and multimodal monolingual data. Different processing may be performed on different types of sample data to determine the undetermined image sample feature, the first undetermined source text, and the first undetermined target text.

In some embodiments, when the sample data includes the multimodal multilingual data, an image feature output after the first image is input into the image encoder may be used as the undetermined image sample feature, the first source-language text may be used as the first undetermined source text, and the first target-language text may be used as the first undetermined target text. In this way, the undetermined image sample feature, the first undetermined source text, and the first undetermined target text for training may be obtained.

In some other embodiments, when the sample data includes the unimodal multilingual data, a preset image sample feature may be used as the undetermined image sample feature, the second source-language text may be used as the first undetermined source text, and the second target-language text may be used as the first undetermined target text.

Exemplarily, the preset image sample feature may be 0, that is, the undetermined image sample feature may be set to 0, and the undetermined multimodal translation model may be used as a normal text Transformer model. In some other embodiments, when the sample data includes the multimodal monolingual data, an image feature output after the second image is input into the image encoder may be used as the undetermined image sample feature, a text obtained by masking the third target-language text may be used as the first undetermined source text, and the third target-language text may be used as the first undetermined target text.

The masking may include masking the third target-language text through a preset mask (mask token). For example, part or all of the text in the third target-language text may be randomly masked, and the masked text may be used as the first undetermined source text.

In some other embodiments, when the sample data includes two or three of the multimodal multilingual data, the unimodal multilingual data, and the multimodal monolingual data, different data may be processed separately according to the preceding methods to obtain the undetermined image sample feature, the first undetermined source text, and the first undetermined target text.

At S12, the first undetermined source text is input into the first text encoder to obtain the first text sample feature output by the first text encoder.

At S13, the first multimodal sample feature is determined according to the first text sample feature and the first image sample feature.

Exemplarily, the first text sample feature and the first image sample feature may be weighted and summed to obtain the first multimodal sample feature.

At S14, the first multimodal sample feature is input into the first text decoder to obtain the first translation text output by the first text decoder.

At S15, the first loss value is determined according to the first translation text and the first undetermined target text. When it is determined, according to the first loss value, that the undetermined multimodal translation model does not meet the first preset stop iteration condition, a parameter of the undetermined multimodal translation model is updated according to the first loss value to obtain a trained undetermined multimodal translation model, and the trained undetermined multimodal translation model is used as a new undetermined multimodal translation model.

In some embodiments, the first preset stop iteration condition may include any one or more of the following conditions:
the first loss value is less than or equal to a preset first preset loss threshold; or
the change amount of the first loss value within a preset number of iterations is less than or equal to a preset first preset change threshold, where the preset number of iterations may be any preset value, such as the last 2 iterations or the last 10 iterations.

In some other embodiments, the first preset stop iteration condition may also be another condition for stopping iteration in the related art, for example, the total number of training iterations is greater than or equal to a preset number of preset iterations threshold, which is not limited in the present disclosure.

In addition, when it is determined, according to the first loss value, that the undetermined multimodal translation model meets the preceding first preset stop iteration condition, the first training step may be stopped, and the trained undetermined multimodal translation model may be used as the target multimodal translation model.

In this way, the target multimodal translation model may be trained and generated through the preceding method.

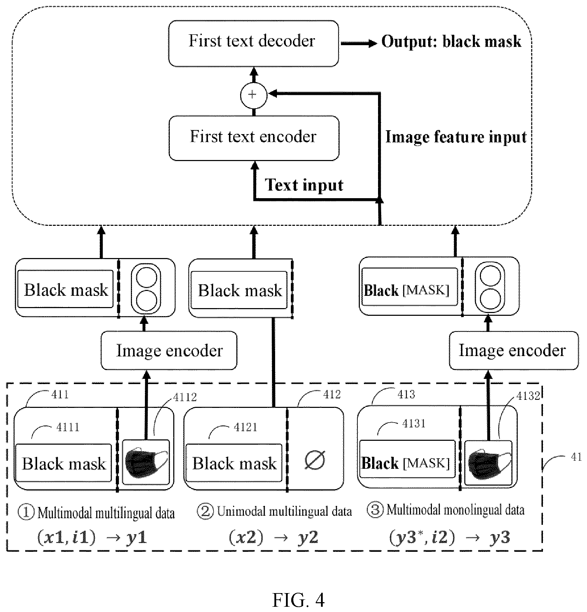

FIG. 4 is a schematic diagram of data flow of training of a target multimodal translation model according to an exemplary embodiment. As shown in FIG. 4, data for training the target multimodal translation model may include sample data 41, and the sample data 41 may include at least two of the preceding multimodal multilingual data 411, unimodal multilingual data 412, and multimodal monolingual data 413.

As shown in FIG. 4, the multimodal multilingual data 411 may be characterized in a form of "(x1, i1) → y1", where x1 represents the first source-language text 4111 (for example, "Black mask" in FIG. 4), i1 represents the first image 4112 (for example, the black mask picture 4112 in the figure), and y1 represents the first target-language text (for example, may be "black mask"). The multimodal multilingual data 411 may also be referred to as triplet data. The unimodal multilingual data 412 may be characterized in a form of "(x2) → y2", where x2 represents the second source-language text 4121, and y2 represents the second target-language text. The unimodal multilingual data 412 may also be referred to as bilingual text data. The multimodal monolingual data 413 may be characterized in a form of "(y3*, i2) → y3", where i2 represents the second image 4132, y3 represents the third target-language text, and y3* represents the text 4131 obtained by masking the third target-language text. [MASK] in the figure indicates that the text here is masked.

In some embodiments, the first image and/or the second image may be extracted as an image feature using the image encoder (such as the image encoder in the CLIP model), the undetermined text may be extracted as a text feature through the first text encoder (such as the text encoder in the CLIP model), and the undetermined text may include at least two of the preceding first source-language text 4111, second source-language text 4121, and text 4131 obtained by masking the third target-language text. The image feature and the text feature are weighted and summed to obtain the target feature, and the target feature is input into the first text decoder for translation according to the target feature. Exemplarily:
for the preceding multimodal multilingual data, the image feature of the first image may be extracted through the image encoder, the text feature of the first source-language text may be extracted through the first text encoder, the image feature and the text feature are weighted and summed as the final target feature, and machine translation is performed based on the target feature, that is, the target feature is input into the first text decoder for translation.

For the preceding unimodal multilingual data, the image feature may be set to 0. At this time, the model may degenerate into a normal text Transformer model. The text feature of the second source-language text is directly extracted through the first text encoder, the text feature is used as the target feature, and machine translation is performed based on the target feature, that is, the target feature is input into the first text decoder for translation.

For the preceding multimodal monolingual data, a mechanism similar to self-supervision learning may be used, a preset mask (mask token) may be used to randomly mask part of the original text of the third target-language text, the text feature of the third target-language text with the original text being masked is extracted through the first text encoder, the image feature of the second image is extracted through the image encoder, the image feature and the text feature are weighted and summed as the target feature, and machine translation is performed based on the target feature, that is, the target feature is input into the first text decoder for translation, for example, to restore the original text.

In this way, fusion multimodal translation may be implemented through the target multimodal translation model. More types of sample data are introduced in the training, thereby improving the translation accuracy of the trained model.

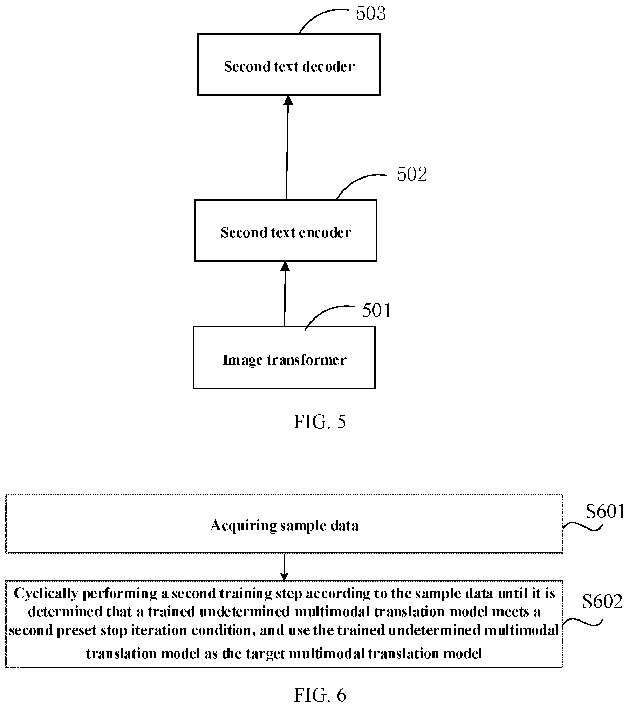

FIG. 5 is a structural diagram of another target multimodal translation model according to an exemplary embodiment. As shown in FIG. 5, the target multimodal translation model includes an image transformer 501, a second text encoder 502, and a second text decoder 503. An output of the image transformer 501 may be used as an input of the second text encoder 502, and an output of the second text encoder 502 may be used as an input of the second text decoder 503.

It should be noted that the target multimodal translation model shown in FIG. 5 may also be referred to as a prompt multimodal translation model. A target prompt text is generated through an image transformer to assist in translating the source text. Based on the target multimodal translation model, S102 may include the following sub-steps.

Firstly, the source associated image is input into the image transformer to obtain the target prompt text output by the image transformer.

Exemplarily, the image transformer may be an image annotation model (for example, a Caption model or the like) generated in advance, which is used to extract a prompt keyword from the input image and output the target prompt text, so as to assist in machine translation through the target prompt text.

Secondly, the source text and the target prompt text are input into the second text encoder to obtain the second source text feature output by the text encoder.

Exemplarily, the second text encoder may also be the text encoder in the CLIP model, and the second text encoder may also be a neural network that encodes a text in the related art. The source text and the target prompt text may be spliced and input into the second text encoder, or the source text and the target prompt text may be input into the second text encoder separately.

Finally, the second source text feature is input into the second text decoder to obtain the target translation text output by the text decoder.

It should be noted that the second text decoder may be a decoder used for machine translation in the related art, and the present disclosure does not limit the specific structure of the second text decoder.

In this way, the source text and the source associated image may be processed through the image transformer, the second text encoder, and the second text decoder in the target multimodal translation model to obtain the translated target translation text.

FIG. 6 is a flowchart of a method for generating another target multimodal translation model according to an exemplary embodiment. As shown in FIG. 6, the target multimodal translation model may be obtained by training an undetermined multimodal translation model. The structure of the undetermined multimodal translation model is the same as that of the target multimodal translation model. For example, the undetermined multimodal translation model may also include the image transformer, the second text encoder, and the second text decoder shown in FIG. 4. The method may include the steps described below.

At S601, sample data is obtained.

At S602, a second training step is cyclically performed according to the sample data until it is determined that a trained undetermined multimodal translation model meets a second preset stop iteration condition, and the trained undetermined multimodal translation model is used as the target multimodal translation model.

The second training step includes the steps described below.

At S21, an undetermined prompt text, a second undetermined source text, and a second undetermined target text are determined according to the sample data.

The sample data may also include at least two of the preceding multimodal multilingual data, unimodal multilingual data, and multimodal monolingual data. Different processing may be performed on different types of sample data to determine the undetermined prompt text, the second undetermined source text, and the second undetermined target text.

In some embodiments, when the sample data includes the multimodal multilingual data, a text output after the first image being input into the image transformer is used as the undetermined prompt text, the first source-language text is used as the second undetermined source text, and the first target-language text is used as the second undetermined target text.

In some other embodiments, when the sample data includes the unimodal multilingual data, a preset prompt text is used as the undetermined prompt text, the second source-language text is used as the second undetermined source text, and the second target-language text is used as the second undetermined target text. Exemplarily, the preset prompt text may be a blank text.

In some other embodiments, when the sample data includes the multimodal monolingual data, a text output after the second image being input into the image transformer is used as the undetermined prompt text, a text obtained by masking the third target-language text is used as the second undetermined source text, and the third target-language text is used as the second undetermined target text.

Similarly, the masking may include masking the third target-language text through a preset mask (mask token). For example, part or all of the text in the third target-language text may be randomly masked, and the masked text may be used as the second undetermined source text.

In some other embodiments, when the sample data includes two or three of the multimodal multilingual data, the unimodal multilingual data, and the multimodal monolingual data, different data may be processed separately according to the preceding methods to obtain the undetermined prompt text, the second undetermined source text, and the second undetermined target text.

At S22, the second undetermined source text and the undetermined prompt text are input into the second text encoder to obtain the second text sample feature output by the second text encoder.

In this step, the second undetermined source text and the undetermined prompt text may be spliced and input into the second text encoder, or the second undetermined source text and the undetermined prompt text may be input into the second text encoder separately.

At S23, the second text sample feature is input into the second text decoder to obtain the second translation text output by the second text decoder.

At S24, the second loss value is determined according to the second translation text and the second undetermined target text. When it is determined, according to the second loss value, that the undetermined multimodal translation model does not meet the second preset stop iteration condition, the parameter of the undetermined multimodal translation model is updated according to the second loss value to obtain a trained undetermined multimodal translation model, and the trained undetermined multimodal translation model is used as a new undetermined multimodal translation model.

In some embodiments, the second preset stop iteration condition may include any one or more of the following conditions:
the second loss value is less than or equal to a preset second preset loss threshold; or
the change amount of the second loss value within a preset number of iterations is less than or equal to a preset second preset change threshold, where the preset number of iterations may be any preset value, such as the last two iterations or the last 10 iterations.

In some other embodiments, the second preset stop iteration condition may also be another condition for stopping iteration in the related art, for example, the total number of training iterations is greater than or equal to a preset number of preset iterations threshold, which is not limited in the present disclosure.

In addition, when it is determined, according to the second loss value, that the undetermined multimodal translation model meets the preceding first preset stop iteration condition, the first training step may be stopped, and the trained undetermined multimodal translation model may be used as the target multimodal translation model.

In this way, the target multimodal translation model may be trained and generated through the preceding method.

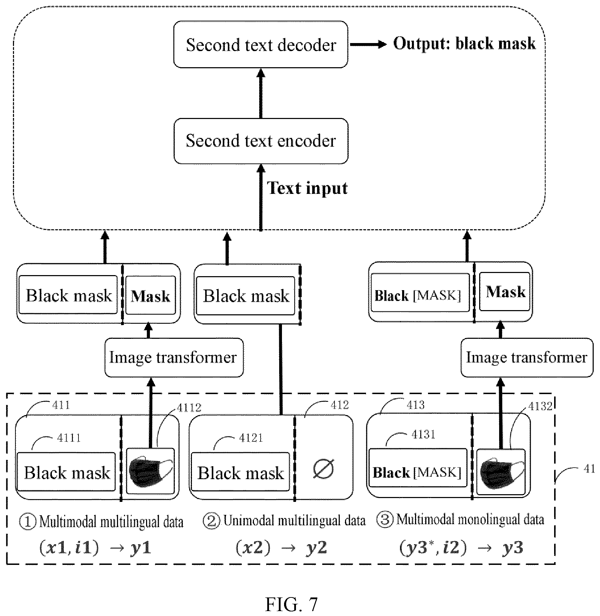

FIG. 7 is a schematic diagram of data flow of training of another target multimodal translation model according to an exemplary embodiment. As shown in FIG. 7, data for training the target multimodal translation model may include sample data 41, and the sample data 41 may include at least two of the preceding multimodal multilingual data 411, unimodal multilingual data 412, and multimodal monolingual data 413.

For the specific representation of the preceding sample data, reference may be made to the description of FIG. 4 in the present disclosure, which is not described herein again.

Based on FIG. 7, the first image and/or the second image may be converted into an undetermined prompt text (for example, a prompt keyword) through an image transformer (for example, a Caption model), and auxiliary translation is performed according to the undetermined prompt text. Exemplarily:
for the preceding multimodal multilingual data, the first image may be directly converted into the undetermined prompt text through the image transformer, and the undetermined prompt text and the first source-language text are spliced and used as a new input text to train the second text encoder and the second text decoder in the undetermined multimodal translation model.

For the preceding unimodal multilingual data, model training may be directly performed on parallel corpus. At this time, the model degenerates into a normal text Transformer model. The second text encoder and the second text decoder in the undetermined multimodal translation model are trained based on the second source-language text and the second target-language text.

For the preceding multimodal monolingual data, a mechanism similar to self-supervision learning may be used, a preset mask (mask token) may be used to randomly mask part of the original text of the third target-language text, the first image is directly converted into the undetermined prompt text through the image transformer, and the undetermined prompt text and the third target-language text after the original text being masked are spliced and used as a new input text to train the second text encoder and the second text decoder in the undetermined multimodal translation model.

In this way, prompt multimodal translation may be implemented through the target multimodal translation model. More types of sample data are introduced in the training, thereby improving the translation accuracy of the trained model.

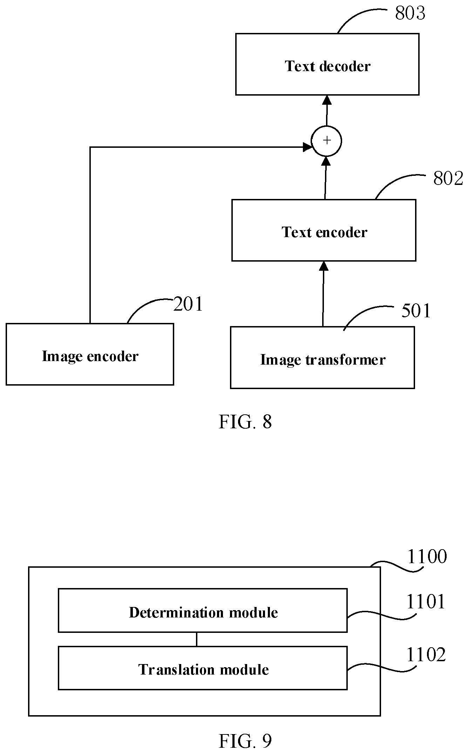

FIG. 8 is a structural diagram of another target multimodal translation model according to an exemplary embodiment. As shown in FIG. 8, the target multimodal translation model includes an image encoder 201, an image transformer 501, a text encoder 802, and a text decoder 803. An output of the image transformer 501 may be used as an input of the text encoder 502, and an output of the image encoder 201 and an output of the text encoder 802 may be weighted and then input into the text decoder 803.

It should be noted that for the specific implementations of the preceding image encoder, image transformer, text encoder, and text decoder, reference may be made to the description of the preceding embodiments of the present disclosure, which is not described herein again.

In this way, the preceding two models, that is, the fusion model and the prompt model, may be used in combination to further improve the translation accuracy of the target multimodal translation model.

In order to verify the effect of the target multimodal translation model in the embodiments of the present disclosure, bilingual evaluation understudy (BLEU) metrics of various models are compared and verified. Table 1 shows the BLEU metrics obtained by performing multimodal translation verification on different models.

**Table 1**

| Model name | Training data | | |
|---|---|---|---|
| | Multimodal multilingual data | Multimodal multilingual data+unimodal multilingual data | Multimodal multilingual data+unimodal multilingual data+multimodal monolingual data |
| Selective attention translation model | 36.39 | Not supported | Not supported |
| Fusion multimodal translation model | 37.18 | 39.63 | 41.49 |
| Prompt multimodal translation model | 37.20 | 38.22 | 40.79 |
| Fusion+prompt multimodal translation model | 37.03 | 40.10 | 41.62 |

The selective attention translation model in Table 1 is a multimodal translation model used in the related art.

The fusion multimodal translation model is the target multimodal translation model shown in FIG. 2 in the embodiments of the present disclosure. The prompt multimodal translation model is the target multimodal translation model shown in FIG. 5 in the embodiments of the present disclosure. The fusion+prompt multimodal translation model is the target multimodal translation model shown in FIG. 8 in the embodiments of the present disclosure.

As shown in Table 1, when the multimodal multilingual data is used as training sample data, the BLEU metric of the selective attention translation model is 36.39, the BLEU metric of the fusion multimodal translation model is 37.18, the BLEU metric of the prompt multimodal translation model is 37.20, and the BLEU metric of the fusion+prompt multimodal translation model is 37.03.

When the "multimodal multilingual data+unimodal multilingual data" is used together as training sample data, the BLEU metric of the fusion multimodal translation model is 39.63, the BLEU metric of the prompt multimodal translation model is 38.22, and the BLEU metric of the fusion+prompt multimodal translation model is 40.10.

When the "multimodal multilingual data+unimodal multilingual data+multimodal monolingual data" is used together as training sample data, the BLEU metric of the fusion multimodal translation model is 41.49, the BLEU metric of the prompt multimodal translation model is 40.79, and the BLEU metric of the fusion+prompt multimodal translation model is 41.62.

It can be seen that the target multimodal translation model and the translation method provided in the embodiments of the present disclosure can greatly improve the effect of multimodal translation.

FIG. 9 is a block diagram of a translation apparatus 1100 according to an exemplary embodiment. As shown in FIG. 9, the apparatus 1100 may include:
a determination module 1101 configured to determine a source text to be translated and a source associated image corresponding to the source text; and
a translation module 1102 configured to input the source text and the source associated image into a pre-generated target multimodal translation model to obtain a target translation text output by the target multimodal translation model.

The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

According to one or more embodiments of the present disclosure, the target multimodal translation model includes an image encoder, a first text encoder, and a first text decoder. The translation module 1102 is configured to input the source associated image into the image encoder to obtain a source associated image feature output by the image encoder, input the source text into the first text encoder to obtain a first source text feature output by the first text encoder, obtain a target feature by weighting the first source text feature and the source associated image feature, and input the target feature into the first text decoder to obtain the target translation text output by the first text decoder.

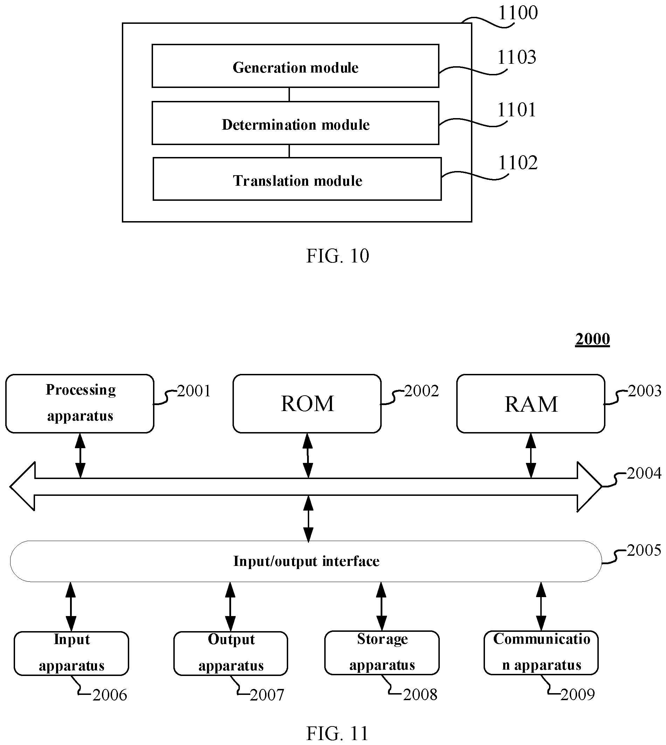

FIG. 10 is a block diagram of another translation apparatus 1100 according to an exemplary embodiment. The undetermined multimodal translation model includes the image encoder, the first text encoder, and the first text decoder. As shown in FIG. 10, the apparatus 1100 may further include:
a generation module 1103 configured to obtain the sample data, cyclically perform the first training step according to the sample data until it is determined that a trained undetermined multimodal translation model meets a first preset stop iteration condition, and use the trained undetermined multimodal translation model as the target multimodal translation model.

The first training step includes: determining an undetermined image sample feature, a first undetermined source text, and a first undetermined target text according to the sample data; inputting the first undetermined source text into the first text encoder to obtain a first text sample feature output by the first text encoder; determining a first multimodal sample feature according to the first text sample feature and the first image sample feature; inputting the first multimodal sample feature into the first text decoder to obtain a first translation text output by the first text decoder; and determining a first loss value according to the first translation text and the first undetermined target text, and when it is determined, according to the first loss value, that the undetermined multimodal translation model does not meet the first preset stop iteration condition, updating a parameter of the undetermined multimodal translation model according to the first loss value to obtain a trained undetermined multimodal translation model, and using the trained undetermined multimodal translation model as a new undetermined multimodal translation model.

According to one or more embodiments of the present disclosure, the generation module 1103 is configured to: when the sample data includes the multimodal multilingual data, use an image feature output after the first image being input into the image encoder as the undetermined image sample feature, use the first source-language text as the first undetermined source text, and use the first target-language text as the first undetermined target text; or when the sample data includes the unimodal multilingual data, use a preset image sample feature as the undetermined image sample feature, use the second source-language text as the first undetermined source text, and use the second target-language text as the first undetermined target text; or when the sample data includes the multimodal monolingual data, use an image feature output after the second image being input into the image encoder as the undetermined image sample feature, use a text obtained by masking the third target-language text as the first undetermined source text, and use the third target-language text as the first undetermined target text.

According to one or more embodiments of the present disclosure, the target multimodal translation model includes an image transformer, a second text encoder, and a second text decoder. The translation module 1102 is configured to input the source associated image into the image transformer to obtain a target prompt text output by the image transformer, input the source text and the target prompt text into the second text encoder to obtain a second source text feature output by the second text encoder, and input the second source text feature into the second text decoder to obtain a target translation text output by the text decoder.

According to one or more embodiments of the present disclosure, the undetermined multimodal translation model includes the image transformer, the second text encoder, and the second text decoder. The generation module 1103 is configured to obtain the sample data, cyclically perform a second training step according to the sample data until it is determined that a trained undetermined multimodal translation model meets a second preset stop iteration condition, and use the trained undetermined multimodal translation model as the target multimodal translation model.

The second training step includes: determining an undetermined prompt text, a second undetermined source text, and a second undetermined target text according to the sample data; inputting the second undetermined source text and the undetermined prompt text into the second text encoder to obtain a second text sample feature output by the second text encoder; inputting the second text sample feature into the second text decoder to obtain a second translation text output by the second text decoder; and determining a second loss value according to the second translation text and the second undetermined target text, and when it is determined, according to the second loss value, that the undetermined multimodal translation model does not meet the second preset stop iteration condition, updating a parameter of the undetermined multimodal translation model according to the second loss value to obtain a trained undetermined multimodal translation model, and using the trained undetermined multimodal translation model as a new undetermined multimodal translation model.

According to one or more embodiments of the present disclosure, the generation module 1103 is configured to: when the sample data includes the multimodal multilingual data, use a text output after the first image being input into the image transformer as the undetermined prompt text, use the first source-language text as the second undetermined source text, and use the first target-language text as the second undetermined target text; or when the sample data includes the unimodal multilingual data, use a preset prompt text as the undetermined prompt text, use the second source-language text as the second undetermined source text, and use the second target-language text as the second undetermined target text; or when the sample data includes the multimodal monolingual data, use a text output after the second image being input into the image transformer as the undetermined prompt text, use a text obtained by masking the third target-language text as the second undetermined source text, and use the third target-language text as the second undetermined target text.

Regarding the apparatus in the preceding embodiments, the specific manner in which each module performs operations has been described in detail in the embodiments related to the method, and will not be described in detail here.

Reference is made to FIG. 11 below, which illustrates a structural diagram of an electronic device 2000 (such as a terminal device or a server) suitable for implementing the embodiments of the present disclosure. The terminal device in the embodiments of the present disclosure may include, but is not limited to, a mobile terminal such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and a fixed terminal such as a digital TV and a desktop computer. The server in the embodiments of the present disclosure may include, but is not limited to, a local server, a cloud server, a single server, a distributed server, and the like. The electronic device shown in FIG. 11 is only an example, and should not bring any limitation to the functions and scope of use of the embodiments of the present disclosure.

As shown in FIG. 11, the electronic device 2000 may include a processing apparatus (such as a central processing unit, a graphics processing unit, etc.) 2001. The processing apparatus 2001 may perform various appropriate actions and processing according to a program stored in a read-only memory (ROM) 2002 or a program loaded from a storage apparatus 2008 into a random-access memory (RAM) 2003. The RAM 2003 further stores various programs and data required for operations of the electronic device 2000. The processing apparatus 2001, the ROM 2002, and the RAM 2003 are connected to each other through a bus 2004. An input/output (I/O) interface 2005 is also connected to the bus 2004.

Generally, the following apparatuses may be connected to the input/output interface 2005: an input apparatus 2006 including, for example, a touchscreen, a touchpad, a keyboard, a mouse, a camera, a microphone, an accelerometer, a gyroscope, or the like; an output apparatus 2007 including, for example, a liquid crystal display (LCD), a speaker, a vibrator, or the like; the storage apparatus 2008 including, for example, a magnetic tape, a hard disk, or the like; and a communication apparatus 2009. The communication apparatus 2009 may allow the electronic device 2000 to perform wireless or wired communication with other devices to exchange data. Although FIG. 11 shows the electronic device 2000 having various apparatuses, it should be understood that not all of the apparatuses shown here need to be implemented or present. Alternatively, more or fewer apparatuses may be implemented or present.

In particular, according to an embodiment of the present disclosure, the process described above with reference to the flowchart may be implemented as a computer software program. For example, the embodiment of the present disclosure includes a computer program product, which includes a computer program carried on a non-transitory computer-readable medium, and the computer program includes program code for executing the method shown in the flowchart. In such an embodiment, the computer program may be downloaded and installed from a network through the communication apparatus 2009, or installed from the storage apparatus 2008, or installed from the ROM 2002. When the computer program is executed by the processing apparatus 2001, the preceding functions defined in the methods of the embodiments of the present disclosure are implemented.

It should be noted that the preceding computer-readable medium in the present disclosure may be a computer-readable signal medium or a computer-readable storage medium, or any combination thereof. The computer-readable storage medium may include, but is not limited to, an electrical, magnetic, optical, electromagnetic, infrared, or semiconductor system, apparatus, or device, or any combination thereof. A more specific example of the computer-readable storage medium may include, but is not limited to, an electrical connection with one or more wires, a portable computer disk, a hard disk, a random-access memory (RAM), a read-only memory (ROM), an erasable programmable read-only memory (EPROM or a flash memory), an optical fiber, a portable compact disk read-only memory (CD-ROM), an optical storage device, a magnetic storage device, or any appropriate combination thereof. In the present disclosure, the computer-readable storage medium may be any tangible medium that contains or stores a program, and the program may be used by or used in conjunction with an instruction execution system, apparatus, or device. In the present disclosure, the computer-readable signal medium may include a data signal propagated in a baseband or as a part of a carrier, and computer-readable program code is carried therein. The propagated data signal may adopt many forms, including but not limited to an electromagnetic signal, an optical signal, or any appropriate combination thereof. The computer-readable signal medium may also be any computer-readable medium other than the computer-readable storage medium. The computer-readable signal medium may send, propagate, or transmit a program used by or used in conjunction with an instruction execution system, apparatus, or device. The program code contained on the computer-readable medium may be transmitted by using any suitable medium, including but not limited to: a wire, an optical cable, radio frequency (RF), etc., or any appropriate combination thereof.

In some implementations, the client and the server may communicate using any currently known or future-developed network protocol, such as the hypertext transfer protocol (HTTP), and may be interconnected with digital data communication (for example, a communication network) in any form or medium. Examples of the communication network include a local area network ("LAN"), a wide area network ("WAN"), an internet (for example, the Internet), a peer-to-peer network (for example, an ad hoc peer-to-peer network), and any currently known or future-developed network.

The preceding computer-readable medium may be included in the preceding electronic device, or may exist alone without being assembled into the electronic device.

The preceding computer-readable medium carries one or more programs, and when the one or more programs are executed by the electronic device, the electronic device is caused to: determine a source text to be translated and a source associated image corresponding to the source text; and input the source text and the source associated image into a pre-generated target multimodal translation model to obtain a target translation text output by the target multimodal translation model. The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

The computer program code for performing the operations of the present disclosure may be written in one or more programming languages or a combination thereof. The preceding programming languages include, but are not limited to, object-oriented programming languages such as Java, Smalltalk, C++, and also include conventional procedural programming languages such as the "C" language or similar programming languages. The program code may be executed entirely on a user computer, partly on a user computer, as a stand-alone software package, partly on a user computer and partly on a remote computer, or entirely on a remote computer or a server. In the case involving the remote computer, the remote computer may be connected to the user computer through any kind of network, including a local area network (LAN) or a wide area network (WAN), or may be connected to an external computer (for example, via the Internet using an Internet service provider).

The flowcharts and block diagrams in the drawings illustrate the architecture, functions, and operations of possible implementations of the system, method, and computer program product according to various embodiments of the present disclosure. In this regard, each block in the flowchart or block diagram may represent a module, a program segment, or part of codes that contains one or more executable instructions for implementing specified logical functions. It should also be noted that in some alternative implementations, the functions noted in the blocks may occur in an order different from that noted in the drawings. For example, two blocks shown in succession may, in fact, be executed substantially in parallel or in a reverse order, which depends on the functions involved. It should also be noted that each block in the block diagram and/or flowchart and a combination of blocks in the block diagram and/or flowchart may be implemented by a special-purpose hardware-based system that performs specified functions or operations or a combination of special-purpose hardware and computer instructions.

The modules involved in the embodiments of the present disclosure may be implemented in software or hardware. The name of a module is not intended to limit the module itself. For example, a determination module may also be described as "a module for determining a source text to be translated and a source associated image corresponding to the source text".

The functions described above herein may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), and so on.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

According to one or more embodiments of the present disclosure, a translation method includes:
determining a source text to be translated and a source associated image corresponding to the source text; and
inputting the source text and the source associated image into a pre-generated target multimodal translation model to obtain a target translation text output by the target multimodal translation model.

The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

According to one or more embodiments of the present disclosure, the target multimodal translation model includes an image encoder, a first text encoder, and a first text decoder. The inputting the source text and the source associated image into a pre-generated target multimodal translation model to obtain a target translation text output by the target multimodal translation model includes:
inputting the source associated image into the image encoder to obtain a source associated image feature output by the image encoder;
inputting the source text into the first text encoder to obtain a first source text feature output by the first text encoder;
obtaining a target feature by weighting the first source text feature and the source associated image feature; and
inputting the target feature into the first text decoder to obtain the target translation text output by the first text decoder.

According to one or more embodiments of the present disclosure, the undetermined multimodal translation model includes the image encoder, the first text encoder, and the first text decoder. The target multimodal translation model is generated by:
obtaining the sample data; and
cyclically performing a first training step according to the sample data until it is determined that a trained undetermined multimodal translation model meets a first preset stop iteration condition, and using the trained undetermined multimodal translation model as the target multimodal translation model.

The first training step includes:
determining an undetermined image sample feature, a first undetermined source text, and a first undetermined target text according to the sample data;
inputting the first undetermined source text into the first text encoder to obtain a first text sample feature output by the first text encoder;
determining a first multimodal sample feature according to the first text sample feature and the first image sample feature;
inputting the first multimodal sample feature into the first text decoder to obtain a first translation text output by the first text decoder; and
determining a first loss value according to the first translation text and the first undetermined target text, and when it is determined, according to the first loss value, that the undetermined multimodal translation model does not meet the first preset stop iteration condition, updating a parameter of the undetermined multimodal translation model according to the first loss value to obtain a trained undetermined multimodal translation model, and using the trained undetermined multimodal translation model as a new undetermined multimodal translation model.

According to one or more embodiments of the present disclosure, the determining an undetermined image sample feature, a first undetermined source text, and a first undetermined target text according to the sample data includes:
when the sample data includes the multimodal multilingual data, using an image feature output after the first image being input into the image encoder as the undetermined image sample feature, using the first source-language text as the first undetermined source text, and using the first target-language text as the first undetermined target text; or
when the sample data includes the unimodal multilingual data, using a preset image sample feature as the undetermined image sample feature, using the second source-language text as the first undetermined source text, and using the second target-language text as the first undetermined target text; or
when the sample data includes the multimodal monolingual data, using an image feature output after the second image being input into the image encoder as the undetermined image sample feature, using a text obtained by masking the third target-language text as the first undetermined source text, and using the third target-language text as the first undetermined target text.

According to one or more embodiments of the present disclosure, the target multimodal translation model includes an image transformer, a second text encoder, and a second text decoder. The inputting the source text and the source associated image into a pre-generated target multimodal translation model to obtain a target translation text output by the target multimodal translation model includes:
inputting the source associated image into the image transformer to obtain a target prompt text output by the image transformer;
inputting the source text and the target prompt text into the second text encoder to obtain a second source text feature output by the text encoder; and
inputting the second source text feature into the second text decoder to obtain the target translation text output by the text decoder.

According to one or more embodiments of the present disclosure, the undetermined multimodal translation model includes the image transformer, the second text encoder, and the second text decoder. The target multimodal translation model is generated by:
obtaining the sample data; and
cyclically performing a second training step according to the sample data until it is determined that a trained undetermined multimodal translation model meets a second preset stop iteration condition, and using the trained undetermined multimodal translation model as the target multimodal translation model.

The second training step includes:
determining an undetermined prompt text, a second undetermined source text, and a second undetermined target text according to the sample data;
inputting the second undetermined source text and the undetermined prompt text into the second text encoder to obtain a second text sample feature output by the second text encoder;
inputting the second text sample feature into the second text decoder to obtain a second translation text output by the second text decoder; and
determining a second loss value according to the second translation text and the second undetermined target text, and when it is determined, according to the second loss value, that the undetermined multimodal translation model does not meet the second preset stop iteration condition, updating a parameter of the undetermined multimodal translation model according to the second loss value to obtain a trained undetermined multimodal translation model, and using the trained undetermined multimodal translation model as a new undetermined multimodal translation model.

According to one or more embodiments of the present disclosure, the determining an undetermined prompt text, a second undetermined source text, and a second undetermined target text according to the sample data includes:
when the sample data includes the multimodal multilingual data, using a text output after the first image being input into the image transformer as the undetermined prompt text, using the first source-language text as the second undetermined source text, and using the first target-language text as the second undetermined target text; or
when the sample data includes the unimodal multilingual data, using a preset prompt text as the undetermined prompt text, using the second source-language text as the second undetermined source text, and using the second target-language text as the second undetermined target text; or
when the sample data includes the multimodal monolingual data, using a text output after the second image being input into the image transformer as the undetermined prompt text, using a text obtained by masking the third target-language text as the second undetermined source text, and using the third target-language text as the second undetermined target text.

According to one or more embodiments of the present disclosure, a translation apparatus is provided. The apparatus includes:
a determination module configured to determine a source text to be translated and a source associated image corresponding to the source text; and
a translation module configured to input the source text and the source associated image into a pre-generated target multimodal translation model to obtain a target translation text output by the target multimodal translation model.

The target multimodal translation model is a model generated by training an undetermined multimodal translation model according to sample data, and the sample data includes at least two of multimodal multilingual data, unimodal multilingual data, and multimodal monolingual data. The multimodal multilingual data includes a first source-language text, a first target-language text, and a first image corresponding to the first source-language text, the unimodal multilingual data includes a second source-language text and a second target-language text, and the multimodal monolingual data includes a third target-language text and a second image. The first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

The above description is only preferred embodiments of the present disclosure and an explanation of the technical principles applied. Those skilled in the art should understand that the scope of disclosure involved in the present disclosure is not limited to the technical solutions formed by the specific combination of the above technical features, but also covers other technical solutions formed by any combination of the above technical features or equivalent features thereof without departing from the above disclosed concepts, for example, a technical solution formed by replacing the preceding features with technical features with similar functions disclosed in the present disclosure (but not limited thereto).

In addition, although operations are described in a specific order, this should not be understood as requiring these operations to be performed in the specific order shown or in a sequential order. Under certain circumstances, multitasking and parallel processing may be advantageous. Similarly, although several specific implementation details are included in the preceding discussion, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments separately or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only exemplary forms for implementing the claims. Regarding the apparatus in the preceding embodiments, the specific manner in which each module performs operations has been described in detail in the embodiments related to the method, and will not be described in detail here.

## Claims

1. A translation method, comprising:
determining a source text to be translated and a source associated image corresponding to the source text; and
inputting the source text and the source associated image into a pre-generated target multimodal translation model to obtain a target translation text output by the target multimodal translation model,
wherein the target multimodal translation model is a model generated by training an undetermined multimodal translation model according to sample data, the sample data comprises at least two of multimodal multilingual data, unimodal multilingual data, and multimodal monolingual data, the multimodal multilingual data comprises a first source-language text, a first target-language text, and a first image corresponding to the first source-language text, the unimodal multilingual data comprises a second source-language text and a second target-language text, the multimodal monolingual data comprises a third target-language text and a second image, the first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

2. The method of claim 1, wherein the target multimodal translation model comprises an image encoder, a first text encoder, and a first text decoder, and inputting the source text and the source associated image into the pre-generated target multimodal translation model to obtain the target translation text output by the target multimodal translation model comprises:
inputting the source associated image into the image encoder to obtain a source associated image feature output by the image encoder;
inputting the source text into the first text encoder to obtain a first source text feature output by the first text encoder;
obtaining a target feature by weighting the first source text feature and the source associated image feature; and
inputting the target feature into the first text decoder to obtain the target translation text output by the first text decoder.

3. The method of claim 2, wherein the undetermined multimodal translation model comprises the image encoder, the first text encoder, and the first text decoder, and the target multimodal translation model is generated by:
obtaining the sample data; and
cyclically performing a first training step according to the sample data until it is determined that a trained undetermined multimodal translation model meets a first preset stop iteration condition, and using the trained undetermined multimodal translation model as the target multimodal translation model,
wherein the first training step comprises:
determining an undetermined image sample feature, a first undetermined source text, and a first undetermined target text according to the sample data;
inputting the first undetermined source text into the first text encoder to obtain a first text sample feature output by the first text encoder;
determining a first multimodal sample feature according to the first text sample feature and the first image sample feature;
inputting the first multimodal sample feature into the first text decoder to obtain a first translation text output by the first text decoder; and
determining a first loss value according to the first translation text and the first undetermined target text, and when it is determined, according to the first loss value, that the undetermined multimodal translation model does not meet the first preset stop iteration condition, updating a parameter of the undetermined multimodal translation model according to the first loss value to obtain a trained undetermined multimodal translation model, and using the trained undetermined multimodal translation model as a new undetermined multimodal translation model.

4. The method of claim 3, wherein determining the undetermined image sample feature, the first undetermined source text, and the first undetermined target text according to the sample data comprises:
when the sample data comprises the multimodal multilingual data, using an image feature output after the first image being input into the image encoder as the undetermined image sample feature, using the first source-language text as the first undetermined source text, and using the first target-language text as the first undetermined target text; or
when the sample data comprises the unimodal multilingual data, using a preset image sample feature as the undetermined image sample feature, using the second source-language text as the first undetermined source text, and using the second target-language text as the first undetermined target text; or
when the sample data comprises the multimodal monolingual data, using an image feature output after the second image being input into the image encoder as the undetermined image sample feature, using a text obtained by masking the third target-language text as the first undetermined source text, and using the third target-language text as the first undetermined target text.

5. The method of claim 1, wherein the target multimodal translation model comprises an image transformer, a second text encoder, and a second text decoder, and inputting the source text and the source associated image into the pre-generated target multimodal translation model to obtain the target translation text output by the target multimodal translation model comprises:
inputting the source associated image into the image transformer to obtain a target prompt text output by the image transformer;
inputting the source text and the target prompt text into the second text encoder to obtain a second source text feature output by the text encoder; and
inputting the second source text feature into the second text decoder to obtain the target translation text output by the text decoder.

6. The method of claim 5, wherein the undetermined multimodal translation model comprises the image transformer, the second text encoder, and the second text decoder, and the target multimodal translation model is generated by:
obtaining the sample data; and
cyclically performing a second training step according to the sample data until it is determined that a trained undetermined multimodal translation model meets a second preset stop iteration condition, and using the trained undetermined multimodal translation model as the target multimodal translation model,
wherein the second training step comprises:
determining an undetermined prompt text, a second undetermined source text, and a second undetermined target text according to the sample data;
inputting the second undetermined source text and the undetermined prompt text into the second text encoder to obtain a second text sample feature output by the second text encoder;
inputting the second text sample feature into the second text decoder to obtain a second translation text output by the second text decoder; and
determining a second loss value according to the second translation text and the second undetermined target text, and when it is determined, according to the second loss value, that the undetermined multimodal translation model does not meet the second preset stop iteration condition, updating a parameter of the undetermined multimodal translation model according to the second loss value to obtain a trained undetermined multimodal translation model, and using the trained undetermined multimodal translation model as a new undetermined multimodal translation model.

7. The method of claim 6, wherein determining the undetermined prompt text, the second undetermined source text, and the second undetermined target text according to the sample data comprises:
when the sample data comprises the multimodal multilingual data, using a text output after the first image being input into the image transformer as the undetermined prompt text, using the first source-language text as the second undetermined source text, and using the first target-language text as the second undetermined target text; or
when the sample data comprises the unimodal multilingual data, using a preset prompt text as the undetermined prompt text, using the second source-language text as the second undetermined source text, and using the second target-language text as the second undetermined target text; or
when the sample data comprises the multimodal monolingual data, using a text output after the second image being input into the image transformer as the undetermined prompt text, using a text obtained by masking the third target-language text as the second undetermined source text, and using the third target-language text as the second undetermined target text.

8. A translation apparatus, comprising:
a determination module configured to determine a source text to be translated and a source associated image corresponding to the source text; and
a translation module configured to input the source text and the source associated image into a pre-generated target multimodal translation model to obtain a target translation text output by the target multimodal translation model,
wherein the target multimodal translation model is a model generated by training an undetermined multimodal translation model according to sample data, the sample data comprises at least two of multimodal multilingual data, unimodal multilingual data, and multimodal monolingual data, the multimodal multilingual data comprises a first source-language text, a first target-language text, and a first image corresponding to the first source-language text, the unimodal multilingual data comprises a second source-language text and a second target-language text, the multimodal monolingual data comprises a third target-language text and a second image, the first image is an associated image corresponding to the first source-language text, the second image is an associated image corresponding to the third target-language text, and a language type of the first source-language text, a language type of the second source-language text, and a language type of the source text are the same, and a language type of the first target-language text, a language type of the second target-language text, a language type of the third target-language text, and a language type of the target translation text are the same.

9. A computer-readable medium having a computer program stored thereon, wherein the computer program, when executed by a processing apparatus, implements the steps of the method of any one of claims 1 to 7.

10. An electronic device, comprising:
a memory having a computer program stored thereon; and
a processing apparatus configured to execute the computer program in the memory to implement the steps of the method of any one of claims 1 to 7.

11. A computer program product, comprising a computer program, wherein the computer program, when executed by a processing apparatus, implements the steps of the method of any one of claims 1 to 7.
